# EUROPEAN PATENT APPLICATION

(11) **EP 4 521 008 A1**
(43) Date of publication of application: **12.03.2025**
(21) Application number: 24193750.7
(22) Date of filing: 09.08.2024
(51) Int. Cl.: F16L 3/10

(54) **A CONVENIENT INSTALLATION PIPE CLAMP**

(30) Priority: 05.09.2023 CN 202322401544 U
(71) Applicant: Wu, Jian, Nantong, Jiangsu Province (CN)
(72) Inventor: Wu, Jian, Nantong, Jiangsu Province (CN)
(74) Representative: Sun, Yiming

(57) **Abstract**

This invention provides a convenient installation pipe clamp, including an upper cover, a lower cover and two assembly bolts. The edge ears of the two ends of the upper cover are equipped with waist holes. The waist holes of the edge ears of the two ends of the upper cover are equipped with a pair of spring leaves inward with their distal opposite edges as the bottom edges. The opposite edges of the pair of spring leaves are parallel and can be opened by raising and closed by pressing. The edge ears of the two ends of the lower cover are equipped with internal threads. The assembly bolt has a length of bare rod without threads under the head, and the thread of the assembly bolt matches the internal thread among the edge ears of the two ends of the lower cover. The assembly bolt passes through the waist holes of the edge ears of the two ends of the upper cover and is screwed into the inner thread among the two end ears of the lower cover. The invention has a simple structure, easy for installation. The upper cover of the pipe clamp needs to be separated before installation of the pipe. When the assembly bolts are withdrawn from the assembled clamp and the upper cover is separated, a pair of spring leaves in the waist holes of the upper cover will hold the assembly bolts within the waist holes of the upper cover by clipping the bare rod under the head of the assembly bolts, which is able to avoid that the assembly bolts will be scattered and lost in the process of installation of the pipe.

## Description

### Technical field

This invention belongs to the technical field of pipe installation and fixation and specifically relates to a convenient installation of pipe clamp.

### Background technology

A pipe clamp is composed of two approximately semicircular pipe clamp bodies and assembly bolts. In the actual installation process of pipe fittings, the assembled two pipe clamp bodies need to be first disassembled, and then the pipe fittings are placed into a space composed of two approximately semicircular pipe clamp bodies. The two semicircular pipe clamp bodies are then closed, and finally locked with assembly bolts to achieve the clamping and fixation of the pipe fittings. However, in the actual installation process of pipe fittings, it is necessary to first remove the assembly bolts from the assembled pipe clamp body, remove the upper cover of the pipe clamp, then place the pipe fittings into the lower cover of the pipe clamp, close the upper cover of the pipe clamp, and finally use the assembly bolts to close and lock the two pipe clamp bodies. However, in the actual installation process of pipe fittings, it is necessary to remove the assembly bolts first from the assembled pipe clamp body, separate the upper cover of the pipe clamp, then place the pipe fittings into the lower cover of the pipe clamp, close the upper cover of the pipe clamp, and finally use the assembly bolts to close and lock the two pipe clamp bodies. The assembly bolts should be removed from the above assembled pipe clamp body first when actually installing the pipe fittings, then the pipe fittings are placed into the cover of the pipe clamp bodies, the upper cover and lower cover of the pipe clamp need to be reassembled with bolts in the end. If the installation space is limited, the operation will be inconvenient, and the assembly bolts are prone to scattering and loss.

### Invention content

### (I) Technical problem to be solved

In view of the above technical problems, this invention provides a convenient installation pipe clamp with a simple structure and more convenient installation. During the installation process, a pair of spring leaves clip the bare rod part of the assembly bolt within the waist hole, which can avoid the scattering and loss of the assembly bolt.

### (II) Technical solution

This invention provides a convenient installation pipe clamp, including an upper cover and assembly bolts. The two end ears of the upper cover are equipped with waist holes, and the waist holes of the upper cover are equipped with a pair of trapezoidal or square spring leaves parallel to each other. The assembly bolt has a section of unthreaded bare rod under the head of assembly bolt.

In some embodiments of the present invention, there is also a lower cover, wherein the edge ears of the two ends of the lower cover are provided with internal threaded tube, and the assembly bolts pass through the waist holes of the edge ears of the two ends of the upper cover and are screwed to the internal thread tube at both ends of the lower cover.

In some embodiments of the present invention, the opposite sides of the pair of spring leaves are parallel.

In some embodiments of the present invention, the spring leaves can be lifted upwards and pressed downwards from the opposite edge of the waist hole on the upper cover.

In some embodiments of the present invention, the length of the assembly bolt rod is greater than the thickness of the upper cover and less than the sum of the thicknesses of the upper and lower covers.

In some embodiments of the present invention, the distance between the near ends of the opposite sides of a pair of spring leaves raised is greater than the outer diameter of the assembly bolt thread, and the assembly bolt can pass through the middle of the raised pair of spring leaves.

In some embodiments of the present invention, the raised spring leaves gradually close from the outside to the inside under pressure during the assembly process of the pipe clamp. The distance between the near ends of the closed pair of spring leaves is greater than the diameter of the assembly bolt rod and smaller than the outer diameter of the assembly bolt thread.

In some embodiments of the present invention, the bare rod portion of the assembly bolt is holded within a pair of closed spring leaves after the pipe clamp assembly, and the threaded portion of the assembly bolt cannot pass between a pair of closed spring leaves.

### (III) Beneficial effects

From the above technical scheme, it can be seen that the present invention has at least one of the following beneficial effects:
(1) The waist hole of this invention is equipped with a pair of parallel and opened and closed spring leaves. The distance between the proximal edges of opposite sides of a pair of closed spring leaves is greater than the diameter of the bare rod of the assembly bolt rod and smaller than the outer diameter of the thread of the assembly bolt. During the installation of pipe fittings, when the assembly bolts are withdrawn from the thread tube at both ends of the lower cover, a pair of closed spring leaves in the waist hole of the upper cover clamp clips the bare rod portion of the assembly bolt in the waist hole, and prevents the threaded part of the assembly bolt from passing through the middle of the pair of closed spring leaves, thereby avoiding the scattering and loss of the assembly bolts.
(2) During the installation of pipe fittings in this invention, the bare rod portion of the bolt assembly is hold in the waist hole of the upper cover, making it convenient to complete the installation of pipe fittings in a narrow space.
(3) After the installation of the pipe fittings in this invention is completed, the spring leaves are blocked between the head of assembly bolt and the lower cover. When the fluid flowing in the pipe fittings causes vibration, the spring leaves can play a role in shock absorption and noise reduction, thereby effectively improving the safety and stability of the installation of the pipe fittings.

### Description of the attached drawings

Figure 1 shows a main view of the top cover before pipe clamp assembly in this embodiment 1, 2.
Figure 2 shows a top view of the top cover before pipe clamp assembly in this embodiment 1, 2.
Figure 3 shows a side view of the top cover before assembly of the pipe clamp in the embodiment 1, 2.
Figure 4 shows a main view of the top cover after assembly of the pipe clamp in Examples 1 and 2.
Figure 5 shows a top view of the top cover after assembly of the pipe clamp in the present embodiment 1, 2.
Figure 6 shows a main view of the lower cover in Example 1 of the invention.
Figure 7 shows the main view of the assembly bolt in the invention embodiment 1, 2.
FIG. 8 shows a schematic view of the pipe clamp after assembly in embodiment 1 of the invention.

### [Description of the symbols of the main components of this invention]

1, 1. Upper cover; 2. Lower cover; 3. Assembly bolts;
4. Spring leaves; 5. Waist hole.

### Specific implementation methods

This invention provides a convenient installation pipe clamp. In order to make the purpose, technical solution, and advantages of this invention clearer, the following is a detailed explanation of this invention, combined with specific embodiment and referring to the attached drawings.

### Specific embodiment

### Embodiment 1

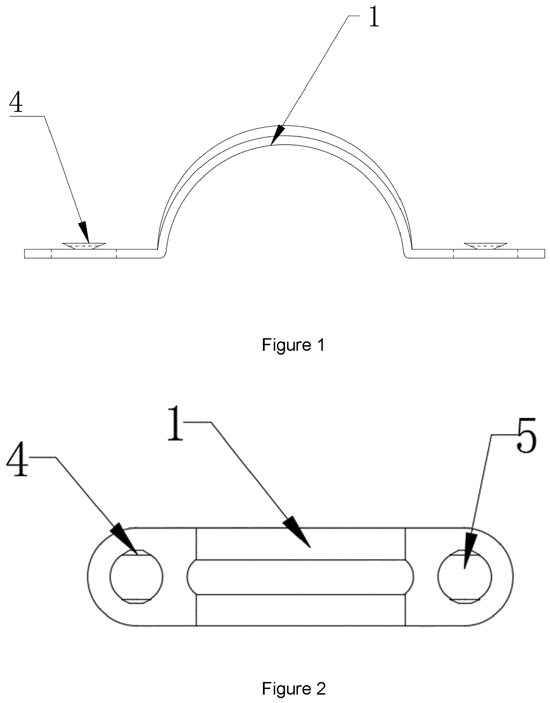

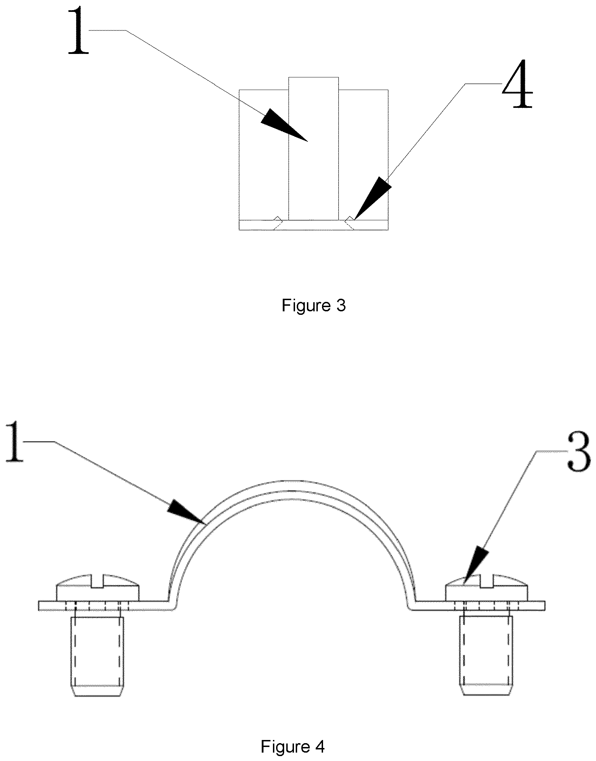

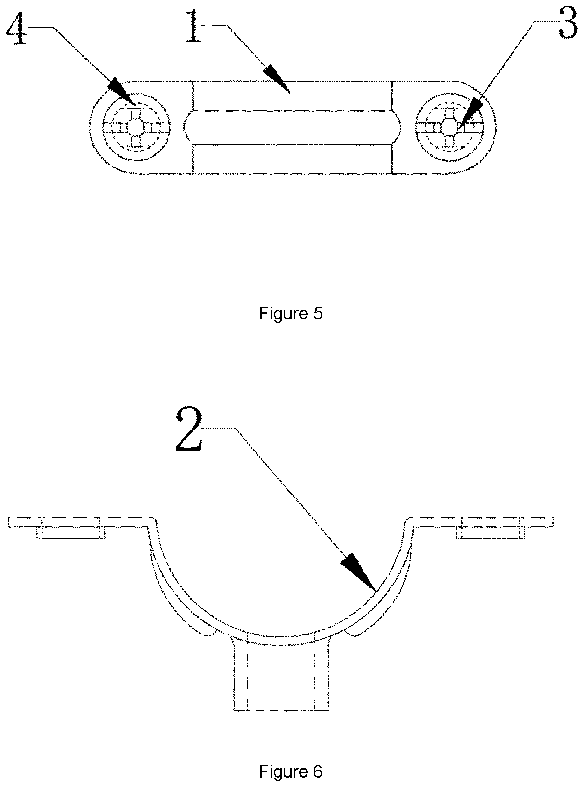

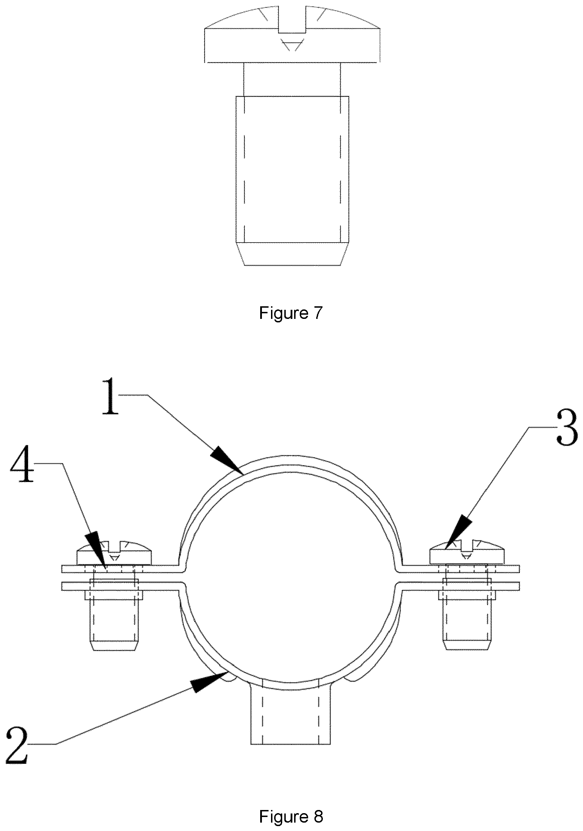

As shown in Figures 1, 2, 3, 4, 5, 6, 7, and 8, the present invention provides a convenient installation pipe clamp, including an upper cover 1, a lower cover 2, and two assembly bolts 3. The two ends of the upper cover 1 are equipped with waist holes 5 in the edge ear, and each of the waist holes 5 in the upper cover 1 is equipped with a pair of spring leaves 4, the opposite sides of the pair of spring leaves 4 are parallel, and the spring leaves 4 can be opened upwards and closed downwards from the far opposite side of the waist hole 5. The assembly bolt 3 has a section of unthreaded rod under the head of the assembly bolt. The distance between the adjacent edges of a pair of raised spring leaves 4 is greater than the outside diameter of the thread of the assembly bolt 3. The two end ears of the lower cover 2 are equipped with internal thread tubes. The assembly bolt 3 passes through the waist hole 5 of the upper cover 1 and is then screwed into the internal thread tubes of the two ends of the lower cover 2. A pair of raised spring leaves 4 gradually closes from top to bottom during the downward screwing process of assembling bolt 3 due to the downward pressure of the bolt head. The distance between the near ends of the a pair of closed spring leaves 4 is greater than the outside diameter of the bare rod part of assembling bolt 3 and less than the outer diameter of the thread of assembling bolt 3.

### Embodiment 2

This embodiment is basically consistent with the above embodiment, except that there is no need for a lower cover: The opposite side of the waist hole 5 is equipped with a pair of spring leaves 4, and the opposite sides between the pair of spring leaves 4 are parallel. The spring leaves 4 can be opened from the inside to the outside and closed from the outside to the inside from the far end opposite side of the waist hole 5. The distance between the near end opposite sides of the lifted spring leaves 4 is greater than the outer diameter of the thread of the assembly bolt 3, and the lifted spring leaves 4 gradually close from the outside to the inside under external pressure. The distance between the near end opposite sides of the closed pair of spring leaves 4 is greater than the diameter of the bare rod part of the assembly bolt 3, and less than the outer diameter of the thread of the assembly bolt 3.

Up to this point, a detailed description of this embodiment has been provided in conjunction with the accompanying drawings. Based on the above description, technical personnel in this field should have a clear understanding of the present invention.

It should be noted that the implementation methods not shown or described in the accompanying drawings or the main text of the specification are all forms known to ordinary technical personnel in the relevant technical field and have not been explained in detail. In addition, the above definitions of various components and methods are not limited to the specific structures, shapes, or methods mentioned in the embodiments.

It should also be noted that this article can provide examples of parameters containing specific values, but these parameters do not need to be exactly equal to the corresponding values, but can be approximated within acceptable error tolerance or design constraints. The directional terms mentioned in the embodiments, such as "up", "down", "front", "back", "left", "right", "inside", "outside", etc., are only for reference to the direction of the drawings and are not intended to limit the scope of protection of the present invention. In addition, unless otherwise described or required to occur sequentially, the order of the above steps is not limited to the ones listed above and can be changed or rearranged according to the required design. And the above embodiments can be used in combination with each other or with other embodiments based on design and reliability considerations, that is, the technical features in different embodiments can be freely combined to form more embodiments.

The specific embodiments described above provide further detailed explanations of the purpose, technical solution, and beneficial effects of the present invention. It should be understood that the above are only specific embodiments of the present invention and are not intended to limit the present invention. Any modifications, equivalent replacements, improvements, etc. made within the spirit and principles of the present invention shall be included in the scope of protection of the present invention.

## Claims

1. A convenient installation pipe clamp, wherein comprises an upper cover and two assembly bolts, the two end side lugs of the upper cover are provided with waist holes, a pair of trapezoidal or square spring leaves are arranged inward with the distal opposite side of the waist hole as the bottom edge in the waist hole of the upper cover, and a small section of smooth rod without thread is provided under the head of the assembly bolt.

2. A convenient installation pipe clamp according to claim 1, **characterized in that** it further comprises a lower cover, wherein the edge ears of the two ends of the lower cover are provided with internal threads, and the assembly bolt passes through the waist holes of the edge ears of the two ends of the upper cover and is connected to the internal threads at both ends of the lower cover.

3. A convenient installation pipe clamp according to claim 1 or 2, **characterized in that** the opposite sides of the pair of spring leaves are parallel and can be opened and closed by raising and pressing.

4. A convenient installation pipe clamp according to claim 3, **characterized in that** the spring leaves can be lifted upwards from the far opposite edge of the waist hole on the upper cover.

5. A convenient installation pipe clamp according to claim 2, **characterized in that** the length of the bare rod of the assembly bolt is greater than the thickness of the upper cover and less than the sum of the thicknesses of the upper and lower covers.

6. A convenient installation pipe clamp according to claim 1 or 2, **characterized in that** the distance between the proximal opposite edges of the upward curled pair of spring leaves is greater than the outer diameter of the assembly bolt thread.

7. A convenient installation pipe clamp according to claim 6, **characterized in that** the raised pair of springs leaves can be closed from the outside to the inside under external force, and the distance between the near ends of the closed pair of spring leaves is greater than the diameter of the bare rod of assembly bolt and smaller than the outer diameter of the assembly bolt thread.
